# FASCICULE DE BREVET EUROPEEN

(11) **EP 0 623 279 B1**
(45) Date de publication et mention de la délivrance du brevet: **26.08.1998**
(21) Numéro de dépôt: 94400972.9
(22) Date de dépôt: 04.05.1994
(51) Int. Cl.: A01J 25/12

(54) **Procédé de moulage de fromages et dispositif pour la mise en oeuvre de ce procédé**
Verfahren zum Formen von Käse und Vorrichtung zur Durchführung des Verfahrens
Process for moulding cheese and device for applying this process

(30) Priorité: 07.05.1993 FR 9305521
(43) Date de publication de la demande: 09.11.1994
(73) Titulaire: EQUIPEMENTS TECHNIQUES DES INDUSTRIES ALIMENTAIRES ET CONNEXES TECNAL, 79000 Niort (FR)
(72) Inventeur: Roumeau, Alain, F-17330 Doeuil sur Mignon (FR)
(74) Mandataire: Derambure, Christian

(56) Documents cités:
- DE-C- 3 637 280
- FR-A- 1 453 759
- FR-A- 2 595 199
- FR-A- 2 613 583

## Description

La présente invention concerne un procédé de moulage de fromages et un dispositif pour la mise en oeuvre du procédé selon l'invention.

La fabrication des fromages consiste, de manière générale, à obtenir, à partir du lait, un mélange de caillé et de sérum qui est introduit dans des moules dans lesquels ils s'égoutteront.

Cette introduction du mélange de caillé et de sérum dans les moules est encore très souvent réalisée de manière manuelle et empirique.

Après l'introduction du mélange sérum-caillé dans un répartiteur placé au-dessus des moules positionnés les uns à côtés des autres, on passe manuellement une raclette à l'intérieur du répartiteur afin de transvaser le mélange caillé-sérum dans les moules.

Cependant, il est difficile d'obtenir des fromages de poids égaux, car le rapport en poids sérum/caillé varie très fortement d'une production à l'autre et au cours du moulage en fonction du sérum qui s'est écoulé hors du moule.

L'automatisation de cette technique se heurte en effet à de nombreux problèmes, tels que l'incertitude sur le rapport entre le volume et le poids du mélange moulé compte tenu des grandes variations qui existent d'une fabrication à une autre dans la teneur en matière sèche du mélange de caillé et de sérum.

La présente invention a pour but de permettre le moulage des fromages automatiquement, tout en garantissant une certaine constance dans la fabrication des fromages, notamment en ce qui concerne leur poids.

Le procédé de moulage de fromages visé par l'invention permet de mouler un mélange de caillé et de sérum dans une série d'alvéoles de moulage.

Selon l'invention, ce procédé comprend les étapes suivantes :
a) déversement du mélange de caillé et de sérum dans une goulotte de répartition ;
b) remplissage par ledit mélange d'une trémie comportant une rangée d'ouvertures situées au-dessus de la série d'alvéoles ; et
c) déplacement de la trémie et de la série d'alvéoles l'une par rapport à l'autre afin de remplir les alvéoles de moulage.

Ainsi, le mélange de caillé et de sérum introduit dans la trémie est transvasé dans les alvéoles par les ouvertures de la trémie. Le déplacement relatif de la trémie et de la série d'alvéoles permet d'avoir un remplissage en continu des alvéoles de moulage.

Selon une version préférée de l'invention, pendant l'étape c), la trémie est fixe et la série d'alvéoles est animée d'un mouvement de va-et-vient sous la trémie.

Ainsi, le remplissage des alvéoles de moulage est réalisé en plusieurs fois, ce qui permet, entre chaque passage sous la trémie, au mélange sérum-caillé de bien se répartir dans les alvéoles.

De préférence, le procédé selon l'invention comporte une étape d) d'accroissement du volume des alvéoles entre chaque déplacement en va-et-vient pendant l'étape c).

Entre chaque passage de la trémie au-dessus des alvéoles, le volume de ces dernières est augmenté d'une valeur prédéterminée.

Le mélange est donc chargé en plusieurs fois dans les alvéoles, ce qui permet d'accroître l'homogénéité du mélange caillé-sérum entre les différentes alvéoles.

Selon une version avantageuse de l'invention, à la fin de l'étape c) on compare la valeur de la quantité du mélange sérum-caillé contenu dans la trémie à une valeur de consigne, la valeur de comparaison obtenue étant utilisée pour ajuster la valeur du volume atteint par les alvéoles à la fin de l'étape c) pour la mise en oeuvre suivante du procédé.

Cette valeur de comparaison permet donc d'ajuster le volume final des alvéoles pour le dernier passage de la trémie au-dessus des alvéoles, pour le moulage suivant.

Ainsi, selon qu'il reste une quantité supérieure ou inférieure à la valeur de consigne, on augmente ou on diminue le volume des alvéoles de moulage.

Ainsi, le volume des alvéoles de moulage est ajusté en fonction des caractéristiques particulières du mélange caillé-sérum, de sorte que l'on transvase des alvéoles de moulage dans les moules un volume plus ou moins important de mélange sérum-caillé afin d'obtenir, après égouttage dans les moules, des fromages d'un poids identique.

Selon une autre version de l'invention, le dispositif de moulage pour la mise en oeuvre du procédé selon l'invention comporte un récipient destiné à contenir un mélange de caillé et de sérum, et une série d'alvéoles de moulage.

Selon l'invention, le dispositif comprend une goulotte de répartition dans laquelle se déverse le récipient, une trémie comportant une rangée d'ouvertures situées au-dessus de la série d'alvéoles de moulage et disposée à la sortie de la goulotte de répartition, et des moyens de déplacement adaptés à déplacer la trémie et la série d'alvéoles de moulage l'une par rapport à l'autre.

D'autres particularités et avantages de l'invention apparaîtront encore dans la description ci-après.

Aux dessins annexés, donnés à titre d'exemples non limitatifs :
- la figure 1 est une vue en élévation du dispositif selon l'invention ; et
- la figure 2 est une vue de dessus du dispositif selon l'invention.

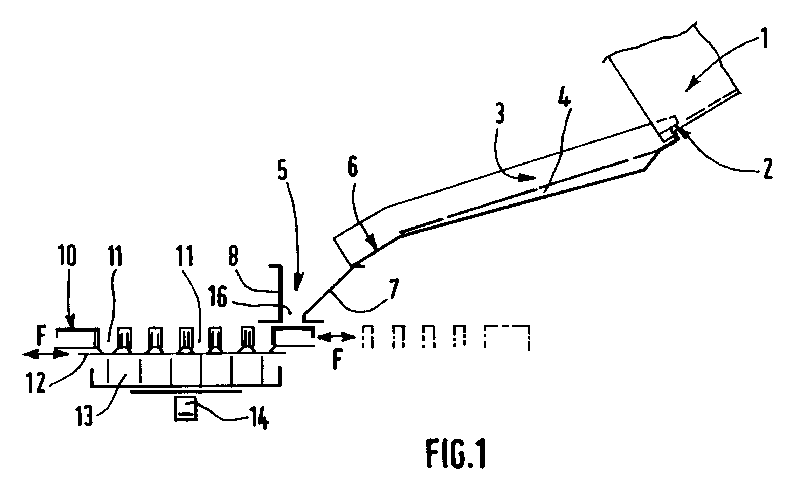

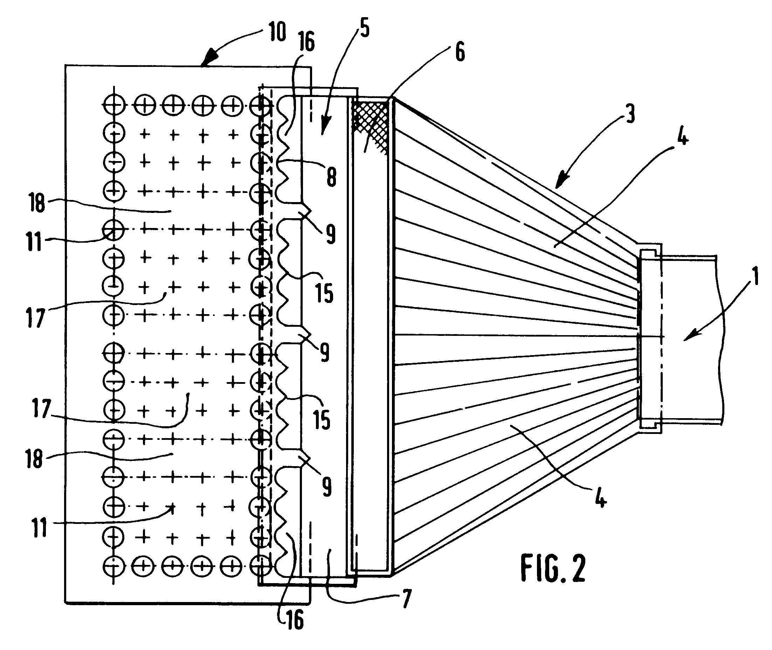

Le dispositif de moulage de fromages conforme à l'invention est représenté dans un exemple de réalisation aux figures 1 et 2.

Il comprend un récipient 1 qui est destiné à contenir un mélange de caillé et de sérum. Ce récipient 1 est typiquement une bassine ou une cuve.

Cette bassine 1 se déverse dans une goulotte de répartition 3, grâce à un mouvement de pivotement autour d'un axe 2 qui permet de basculer la bassine et de décharger son contenu dans la goulotte de répartition 3.

Cette goulotte de répartition est une goulotte 3 inclinée dont le fond a une surface ondulée définissant des gorges 4 divergente depuis la largeur de la bassine 1 jusqu'à la largeur d'une trémie 5. Ces gorges 4 s'étendent sensiblement parallèlement à la direction d'inclinaison de la goulotte 3.

Le mélange caillé-sérum est ainsi réparti de manière uniforme dans les gorges 4 de la goulotte et est acheminé par gravité le long de la pente de la goulotte 3.

Le mélange caillé-sérum est ainsi déplacé vers les alvéoles de moulage 11 qui sont disposées côte à côte dans un plan en formant un rectangle.

La goulotte 3 a une extrémité de sortie, c'est-à-dire son extrémité inférieure, dont la largeur est sensiblement égale à la longueur d'un côté dudit rectangle perpendiculaire à la direction de déplacement F de la trémie 5 et de la série d'alvéoles 11 l'une par rapport à l'autre.

Ainsi, à la sortie de la goulotte 3, le mélange sérum-caillé est uniformément réparti selon une des directions du rectangle formé par les alvéoles.

De préférence, un moyen de dessérumage est disposé sur le parcours du mélange sérum-caillé.

Dans l'exemple de réalisation, le dispositif comprend un moyen de dessérumage constitué d'un plan incliné 6 disposé à l'extrémité de sortie de la goulotte, le plan incliné 6 étant perméable au sérum.

Ce plan incliné 6 forme un angle de 30° environ avec un plan horizontal, alors que la goulotte a une inclinaison de 15° environ avec le plan horizontal.

Ce plan incliné 6 de dessérumage permet d'ôter une partie du sérum contenu dans le mélange.

Il est situé en amont d'une trémie 5 et débouche à son extrémité inférieure dans celle-ci.

Cette trémie 5 comporte une rangée d'ouvertures 16 situées au-dessus de la série d'alvéoles 11.

Cette trémie 5 comporte une paroi 7, inclinée sensiblement à 45° par rapport à un plan horizontal, qui est destinée à recevoir le mélange sérum-caillé après son passage dans la goulotte 3 et le moyen de dessérumage 6.

Comme représenté à la figure 2, la trémie 5 comprend, au niveau de ses ouvertures 16, des dents profilées 15 s'étendant parallèlement à la direction de déplacement F de la trémie 5 et de la série d'alvéoles 11 l'une par rapport à l'autre, et vers l'intérieur de la trémie 5.

Ces dents profilées sont disposées au niveau des ouvertures 16 de la trémie sur la face 8 opposée à la paroi 7 inclinée à 45° de la trémie 5 et sont situés sensiblement au droit des espaces 17 séparant deux alvéoles 11 adjacentes.

Ces dents profilées 15 permettent de canaliser le mélange sérum-caillé vers les alvéoles afin d'éviter l'accumulation de caillé sur les espaces 17 séparant les alvéoles 11 les unes des autres.

Dans cet exemple de réalisation, la série d'alvéoles 11 de moulage est constituée de 4 groupes de 24 alvéoles, chaque groupe de 24 alvéoles correspondant à un groupe de 24 moules.

Ces groupes de 24 moules sont espacés les uns des autres de sorte que des espaces 18, sans alvéoles 11 de moulage, séparent les différents groupes d'alvéoles de moulage.

Ainsi, les ouvertures 16 de la trémie 5 sont séparées par des dents d'obturation 9 situés au droit des espaces 18 sans alvéoles 11 de moulage.

Les dents d'obturation 9 s'étendent verticalement sur le tiers de la hauteur de la trémie 5 et évitent que le mélange sérum-caillé ne soit distribué dans les espaces 18 sans alvéoles.

Les alvéoles 11 sont des cylindres dont la hauteur est réglable afin d'ajuster leur volume. Elles possèdent un fond 12 escamotable de sorte que le mélange de caillé et de sérum peut s'écouler des alvéoles 11 dans des moules 13 situés sous les alvéoles.

Les alvéoles 11 sont soit étanches, soit perméables au sérum.

Afin de régler le volume des alvéoles, celles-ci sont constituées de deux cylindres pouvant coulisser l'un dans l'autre de manière à régler la hauteur des alvéoles, et ainsi leur volume.

Le procédé selon l'invention de moulage de fromages va maintenant être décrit en référence au dispositif décrit ci-dessus.

Le procédé de moulage de fromages selon l'invention comprend les étapes suivantes :
a) déversement du mélange de caillé et de sérum dans la goulotte 3 à partir de la bassine 1 ;
b) remplissage de la trémie 5 par le mélange sérum-caillé ; et
c) déplacement de la trémie 5 et de la série d'alvéoles 11 l'une par rapport à l'autre en mouvement de va-et-vient ;
d) accroissement, entre chaque déplacement en va-et-vient pendant l'étape c), du volume des alvéoles de valeurs prédéterminées.

Le déplacement de la trémie 5 et de la série d'alvéoles 11 l'une par rapport à l'autre est un mouvement de va-et-vient, ce qui permet de remplir les alvéoles 11 en plusieurs passages.

Dans l'exemple de réalisation représenté, la trémie 5 est fixe et la série d'alvéoles 11 est animée d'un mouvement de va-et-vient sous la trémie 5 selon la direction schématisée par la flèche F. Les positions extrêmes des alvéoles 11 dans leur mouvement de va-et-vient sont représentées en traits pleins et en traits mixtes.

La vitesse de déplacement et le nombre de va-et-vient de la trémie 5 et de la série d'alvéoles 11 l'une par rapport à l'autre sont prédéterminés.

La vitesse relative de la trémie par rapport aux alvéoles 11 est de l'ordre de 0,2 mètre par seconde.

L'expérience a montré que quatre passages des alvéoles 11 sous la trémie 5 permettaient d'obtenir un remplissage satisfaisant de ces alvéoles.

Le procédé selon l'invention comprend en outre une étape de dessérumage avant l'étape b), grâce au passage du mélange sérum-caillé sur le plan incliné 6.

Le procédé selon l'invention comprend en outre les étapes suivantes :
e) positionnement, avant la fin de l'étape c) d'une série de moules 13, sensiblement au-dessous de la série d'alvéoles 11 ; et
f) remplissage des moules 13, après l'étape c), par le mélange de caillé et de sérum contenu dans la série d'alvéoles 11 de moulage.

Les moules 13 sont amenés grâce à un convoyeur classique sous la position dans laquelle les alvéoles seront immobilisées après l'étape c). Puis, lorsque les alvéoles sont remplies et immobiles, un élévateur 14 soulève l'ensemble des moules 13 et les positionne sous le fond 12 des alvéoles.

Chaque moule 13 est alors disposé respectivement en-dessous d'une alvéole 11 de moulage.

Le fond 12 est alors escamoté de sorte que le mélange sérum-caillé tombe par gravité des alvéoles 11 dans les moules 13.

Le fond 12 est ajouré, de sorte que des parties pleines ferment les alvéoles dans une position du fond 12 et les parties ajourées sont disposées simultanément sous les alvéoles lors du coulissement du fond 12 dans une autre position.

Les moules 13 sont ensuite convoyés vers les étapes suivantes de la fabrication comprenant de manière connue l'égouttage, l'affinage...

Pendant l'étape c), le remplissage de la trémie 5 est réalisé de façon continue et est interrompu au cours de l'exécution de l'étape c), de préférence lors de l'avant-dernier passage de la trémie 5 au-dessus des alvéoles.

Ainsi, pendant toute la durée de l'étape c), la trémie 5 contient une certaine quantité du mélange.

Ceci permet d'avoir un remplissage complet des alvéoles après chaque déplacement de la trémie au-dessus des alvéoles 11 et d'obtenir ainsi des alvéoles contenant la même quantité de mélange sérum-caillé et une proportion similaire de caillé par rapport au sérum dans chaque alvéole.

A la fin de l'étape c), on compare la valeur de la quantité de mélange contenu dans la trémie 5 à une valeur de consigne, le volume atteint par les alvéoles 11 de moulage à la fin de l'étape c) étant ajusté en fonction de la valeur de comparaison obtenue pour la mise en oeuvre suivante du procédé.

Ainsi, en sachant que la contenance de la bassine doit correspondre au remplissage d'un certain nombre de moules 13, égal à 96 dans cet exemple de réalisation, on augmente le volume des alvéoles 11 ou on le diminue selon que la quantité de mélange de sérum-caillé restant dans la trémie est supérieure ou inférieure à la valeur de consigne.

Le volume des alvéoles 11 de moulage peut également être ajusté en fonction de la valeur du poids du sérum recueilli pendant les étapes a) à f) du procédé et de la valeur du poids des moules 13 remplis après l'étape f).

Bien entendu, l'invention n'est pas limité à l'exemple de réalisation décrit ci-dessus et de nombreuses modifications peuvent être apportées à celui-ci sans sortir du cadre de l'invention.

Ainsi, le moyen de dessérumage 6 peut être constitué par un cylindre par exemple.

La trémie 5 peut également comporter des dents profilées 15 sur la paroi 7 inclinée à 45°, en regard des dents profilées 15 situées sur la paroi verticale 8 de la trémie.

Le nombre de groupes de 24 alvéoles 11 peut varier entre 2 et 6.

L'ensemble des alvéoles 11 peut rester fixe, la trémie 5, la goulotte 3 et la bassine 1 étant déplacées au-dessus des alvéoles 11.

Les moules 13 peuvent être remplis à partir des alvéoles 11 différemment, grâce par exemple à une série de tuyaux qui s'étendent chacun à partir du fond 12 escamotable d'une alvéole 11 jusqu'à un moule 13 associé.

Le volume des alvéoles 11 peut ne pas être modifié pendant l'étape c) mais seulement ajusté entre chaque nouvelle mise en oeuvre du procédé selon l'invention.

## Revendications

1. Procédé de moulage de fromages pour mouler un mélange de caillé et de sérum dans une série d'alvéoles (11) de moulage, caractérisé en ce qu'il comprend les étapes suivantes :
a) déversement du mélange de caillé et de sérum dans une goulotte de répartition (3),
b) remplissage par ledit mélange d'une trémie (5) comportant une rangée d'ouvertures (16) situées au-dessus de la série d'alvéoles (11) ; et
c) déplacement de la trémie (5) et de la série d'alvéoles (11) l'une par rapport à l'autre afin de remplir les alvéoles de moulage (11).

2. Procédé conforme à la revendication 1, caractérisé en ce que le déplacement de la trémie (5) et de la série d'alvéoles (11) l'une par rapport à l'autre est un mouvement de va-et-vient.

3. Procédé conforme à la revendication 2, caractérisé en ce qu'il comporte une étape d) d'accroissement du volume des alvéoles entre chaque déplacement en va-et-vient pendant l'étape c).

4. Procédé conforme à l'une des revendications 1 à 3, caractérisé en ce que pendant l'étape c), la trémie (5) est fixe et la série d'alvéoles (11) est animée d'un mouvement de va-et-vient sous ladite trémie (5).

5. Procédé conforme à l'une des revendications 2 à 4, caractérisé en ce que la vitesse de déplacement et le nombre de va-et-vient de la trémie (5) et de la série d'alvéoles (11) l'une par rapport à l'autre sont prédéterminés.

6. Procédé conforme à l'une des revendications 1 à 5, caractérisé en ce qu'il comporte une étape de dessérumage avant l'étape b).

7. Procédé conforme à l'une des revendications 1 à 6, caractérisé en ce qu'il comporte en outre les étapes suivantes :
e) positionnement, avant la fin de l'étape c), d'une série de moules (13) sensiblement au-dessous de la série d'alvéoles (11) ; et
f) remplissage des moules (13), après l'étape c), par le mélange de caillé et de sérum contenu dans la série d'alvéoles (11) de moulage.

8. Procédé conforme à la revendication 7, caractérisé en ce que chaque moule (13) est disposé respectivement en-dessous d'une alvéole (11) de moulage.

9. Procédé conforme à l'une des revendications 1 à 8, caractérisé en ce que le remplissage de la trémie (5) est réalisé de façon continue et est interrompu au cours de l'exécution de l'étape c).

10. Procédé conforme à l'une des revendications 1 à 9, caractérisé en ce que pendant toute la durée de l'étape c), la trémie (5) contient une certaine quantité dudit mélange.

11. Procédé conforme à la revendication 10, caractérisé en ce qu'à la fin de l'étape c), on compare la valeur de la quantité dudit mélange contenu dans la trémie (5) à une valeur de consigne, la valeur de comparaison obtenue étant utilisée pour ajuster la valeur du volume atteint par les alvéoles (11) à la fin de l'étape c) pour la mise en oeuvre suivante dudit procédé.

12. Procédé conforme à la revendication 7, caractérisé en ce que le volume atteint par les alvéoles (11) de moulage est ajusté en fonction de la valeur du poids du sérum recueilli pendant les étapes a) à f) dudit procédé et de la valeur du poids des moules (13) remplis après l'étape f).

13. Dispositif de moulage pour la mise en oeuvre du procédé conforme à l'une des revendications 1 à 12, comportant un récipient (1), destiné à contenir un mélange de caillé et de sérum, et une série d'alvéoles (11) de moulage, caractérisé en ce qu'il comprend une goulotte de répartition (3) dans laquelle se déverse ledit récipient (1), une trémie (5) comportant une rangée d'ouvertures (16) situées au dessus de la série d'alvéoles (11) de moulage, et disposée à la sortie de la goulotte de répartition (3), et des moyens de déplacement adaptés à déplacer la trémie (5) et la série d'alvéoles (11) de moulage l'une par rapport à l'autre.

14. Dispositif conforme à la revendication 13, caractérisé en ce que la goulotte de répartition (3) est une goulotte (3) inclinée dont le fond a une surface ondulée définissant des gorges (4) s'étendant sensiblement parallèlement à la direction d'inclinaison de ladite goulotte (3) et divergeant depuis la largeur du récipient (1) jusqu'à la largeur de la trémie (5).

15. Dispositif conforme à l'une des revendications 13 ou 14, caractérisé en ce que les alvéoles (11) de moulage sont disposées côte à côte dans un plan en formant un rectangle.

16. Dispositif conforme à l'une des revendications 13 à 15, caractérisé en ce que les alvéoles sont perméables au sérum.

17. Dispositif conforme à la revendication 15 caractérisé en ce que la goulotte de répartition (3) a une extrémité de sortie dont la largeur est sensiblement égale à la longueur d'un côté dudit rectangle perpendiculaire à la direction de déplacement (F) de la trémie (5) et de la série d'alvéoles (11) l'une par rapport à l'autre.

18. Dispositif conforme à l'une des revendications 13 à 17, caractérisé en ce qu'il comprend en outre un moyen de dessérumage (6) constitué d'un plan incliné (6) perméable au sérum disposé en amont de la trémie (5).

19. Dispositif conforme à l'une des revendication 13 à 18, caractérisé en ce que la trémie (5) comprend, au niveau de ses ouvertures (16), des dents profilées (15) s'étendant parallèlement à la direction de déplacement (F) de la trémie (5) et de la série d'alvéoles (11) l'une par rapport à l'autre et vers l'intérieur de la trémie (5).

20. Dispositif conforme à la revendication 19, caractérisé en ce que lesdites dents profilées (15) sont disposées sensiblement au droit des espaces (17) séparant deux alvéoles (11) adjacentes.

21. Dispositif conforme à l'une des revendications 13 à 20, caractérisé en ce que les ouvertures (16) de la trémie (5) sont séparées par des dents d'obturation (9) situés au droit d'espaces (18) sans alvéoles (11) de moulage.

22. Dispositif conforme à l'une des revendications 13 à 21, caractérisé en ce que les alvéoles (11) sont des cylindres dont la hauteur est réglable.

23. Dispositif conforme à l'une des revendications 13 à 22, caractérisé en ce que les alvéoles ont un fond (12) escamotable de sorte que le mélange de caillé et de sérum peut s'écouler des alvéoles (11) dans des moules (13) situés sous les alvéoles (11).

## Claims

1. A cheese moulding method to mould a mixture of curdled milk and whey in a series of moulding cavities (11) characterised in that it comprises the steps of:
a) pouring the mixture of curdled milk and whey into a feeding chute (3),
b) filling a hopper (5) comprising a row of openings (16) located above the series of cavities (11) with said mixture, and
c) displacing the hopper (5) and the series of cavities (11) with respect to one another so as to fill the moulding cavities (11).

2. A method in accordance with claim 1, characterised in that the displacement of the hopper (5) and series of cavities (11) with respect to one another is a back and forth movement.

3. A method in accordance with claim 2, characterised in that it comprises a step (d) of increasing the volume of the cavities between each back and forth displacement during step (c).

4. A method in accordance with one of claims 1 to 3, characterised in that, during step (c), the hopper (5) is stationary and the series of cavities (11) is driven back and forth below said hopper (5).

5. A method in accordance with one of claims 2 to 4, characterised in that the displacement velocity and the number of back and forth movements of the hopper (5) and the series of cavities (11) with respect to one another are predetermined.

6. A method in accordance with one of claims 1 to 5, characterised in that it comprises a whey removal step before step (b).

7. A method in accordance with one of claims 1 to 6, characterised in that it further comprises the following steps:
e) positioning a series of moulds (13) substantially above the series of moulding cavities (11) before the end of step (c), and
f) filling the moulds (13) with the mixture of curdled milk and whey contained in the series of moulding cavities (11) after step (c).

8. A method in accordance with claim 7, characterised in that each mould (13) is arranged below a respective moulding cavity (11).

9. A method in accordance with one of claims 1 to 8, characterised in that the filling of the hopper (5) is performed in a continuous manner and is interrupted in the course of the execution of step (c).

10. A method in accordance with one of claims 1 to 9, characterised in that the hopper (5) contains a certain quantity of said mixture throughout the duration of step (c).

11. A method in accordance with claim 10, characterised in that, at the end of step (c), the value of the quantity of said mixture contained in the hopper (5) is compared with a reference value, the comparison value obtained being used to adjust the value of the volume attained by the moulding cavities (11) at the end of step (c) for the following implementation of said method.

12. A method in accordance with claim 7, characterised in that the volume attained by the moulding cavities (11) is adjusted according to the value of the weight of the whey collected during steps (a) to (f) of said method and the value of the weight of the moulds (13) filled after step (f).

13. A moulding device to implement the method in accordance with one of claims 1 to 12, comprising a recipient (1), intended to contain a mixture of curdled milk and whey, and a series of moulding cavities (11), characterised in that it comprises a feeding chute (3) into which the content of said recipient (1) is poured, a hopper (5) comprising a row of openings (16) located above the series of moulding cavities (11), and arranged at the outlet of the feeding chute (3), and displacement means designed to displace the hopper (5) and the series of moulding cavities (11) with respect to one another.

14. A device in accordance with claim 13, characterised in that the feeding chute (3) is an inclined chute (3) whose bottom has a corrugated surface defining grooves (4) extending substantially parallel to the direction of inclination of said chute (3) and diverging from the width of the recipient (1) to the width of the hopper (5).

15. A device in accordance with one of claims 13 or 14, characterised in that the moulding cavities (11) are arranged side by side on a plane forming a rectangle.

16. A device in accordance with one of claims 13 to 15, characterised in that the cavities are permeable to whey.

17. A device in accordance with claim 15, characterised in that the feeding chute (3) has an outlet end whose width is substantially equal to the length of one side of said rectangle perpendicular to the direction of displacement (F) of the hopper (5) and the series of moulding cavities (11) with respect to one another.

18. A device in accordance with one of claims 13 to 17, characterised in that it further comprises a whey removal means (6) consisting of an inclined surface (6) permeable to whey arranged upstream from the hopper (5).

19. A device in accordance with one of claims 13 to 18, characterised in that the hopper (5) comprises, at its openings (16), profiled teeth (15) extending parallel to the direction of displacement (F) of the hopper (5) and the series of cavities (11) with respect to one another and towards the interior of the hopper (5).

20. A device in accordance with claim 19, characterised in that said profiled teeth (15) are arranged substantially in line with the spaces (17) separating two adjacent cavities (11).

21. A device in accordance with one of claims 13 to 20, characterised in that the openings (16) of the hopper (5) are separated by sealing teeth (9) located in line with the spaces (18) without moulding cavities (11).

22. A device in accordance with one of claims 13 to 21, characterised in that the cavities (11) are cylinders with an adjustable height.

23. A device in accordance with one of claims 13 to 22, characterised in that the cavities have a retractable bottom (12) such that the mixture of curdled milk and whey may flow from the moulding cavities (11) into the moulds (13) located below the moulding cavities (11).

## Patentansprüche

1. Käseformverfahren zum Formen einer Quark- und Serummischung in einer Reihe von Formwaben (11), dadurch gekennzeichnet, daß es folgende Etappen bezitzt:
a) Eingießen der Quark-/Serummischung in eine Verteilerrinne (3),
b) Füllen eines Trichters (5) mit der besagten Mischung, wobei der Trichter (5) über der Wabenreihe (11) eine Reihe von Öffnungen (16) aufweist; und
c) gegenseitiges Verschieben des Trichterz (5) und der Wabenreihe (11), um die Formwaben (11) zu füllen.

2. Verfahren nach Anspruch 1, dadurch gekennzeichnet, daß das gegenseitige Verschieben des Trichters (5) und der Wabenreihe (11) in einer Hin- und Herbewegung besteht.

3. Verfahren nach Anspruch 2, dadurch gekennzeichnet, daß es eine Etappe d) zur Erhöhung des Volumenz der Waben zwischen jeder Hin- und Herbewegung während der Etappe c) umfaßt.

4. Verfahren nach einem der Ansprüche 1 bis 3, dadurch gekennzeichnet, daß der Trichter (5) während der Etappe c) ortsfest ist und die Wabenreihe (11) unter dem besagten Trichter (5) hin- und herbewegt wird.

5. Verfahren nach einem der Ansprüche 2 bis 4, dadurch gekennzeichnet, da die Verfahrgezchwindigkeit und die Anzahl der gegenseitigen Hin- und Herbewegungen des Trichterz (5) und der Wabenreihe (11) vorgegeben sind.

6. Verfahren nach einem der Ansprüche 1 bis 5, dadurch gekennzeichnet, daß es vor der Etappe b) eine Serumentzugsetappe umfaßt.

7. Verfahren nach einem der Ansprüche 1 bis 6, dadurch gekennzeichnet, daß es weiters folgende Etappen umfaßt:
e) Positionierung, vor dem Ende der Etappe c), einer Formenreihe (13) etwa unter der Wabenreihe (11); und
f) Füllen der Formen (13), nach der Etappe c), mit der in der Formwabenreihe (11) enthaltenen Quark- und Serummischung.

8. Verfahren nach Anspruch 7, dadurch gekennzeichnet, dab jede Form (13) jeweils unter einer Formwabe (11) angeordnet ist.

9. Verfahren nach einem der Ansprüche 1 bis 8, dadurch gekennzeichnet, dab das Füllen des Trichters (5) im Dauerbetrieb erfolgt und während der Durchführung der Etappe c) unterbrochen wird.

10. Verfahren nach einem der Ansprüche 1 bis 9, dadurch gekennzeichnet, dab der Trichter (5) während der gesamten Dauer der Etappe c) eine bestimmte Menge der besagten Mischung enthält.

11. Verfahren nach Anspruch 10, dadurch gekennzeichnet, dab am Ende der Etappe c) der Wert der Menge der besagten im Trichter (5) enthaltenen Mischung mit einem Sollwert verglichen wird, wobei der erhaltene Vergleichswert verwendet wird, um den Wert des von den Waben (11) am Ende der Etappe c) erreichten Volumens für die folgende Druchführung des besagten Verfahrens anzupassen.

12. Verfahren nach Anspruch 7, dadurch gekennzeichnet, dab das von den Formwaben (11) erreichte Volumen entsprechend dem Wert des Gewichts des während der Etappen a) bis f) des besagten Verfahrens gesammelten Serums angepabt wird sowie entsprechend dem Wert des Gewichts der nach der Etappe f) gefüllten Formen (13).

13. Formvorrichtung zur Durchführung des Verfahrens nach einem der Ansprüche 1 bis 12, mit einem Behälter (1) zur Aufnahme einer Quark- und Serummischung und mit einer Reihe von Formwaben (11), dadurch gekennzeichnet, dab sie eine Verteilerrinne (3) umfabt, in die der besagte Behälter (1) ausgeleert wird, einen Trichter (5) mit einer über der Formwabenreihe (11) angeordneten Reihe von Öffnungen (16), der sich am Ausgang der Verteilerrinne (3) befindet, und Verschiebungsmittel zum gegenseitigen Verschieben des Trichters (5) und der Formwabenreihe (11).

14. Vorrichtung nach Anspruch 13, dadurch gekennzeichnet, dab die Verteilerrinne (3) eine geneigte Rinne (3) ist, deren Boden eine gewellte Oberfläche mit Rillen (4) aufweist, die sich etwa parallel zur Neigerichtung der besagten Rinne (3) erstrecken und ab der Breite des Behälters (1) bis zur Breite des Trichters (5) divergieren.

15. Vorrichtung nach einem der Ansprüche 13 oder 14, dadurch gekennzeichnet, dab die Formwaben (11) nebeneinander auf einer Ebene angeordnet sind und ein Rechteck bilden.

16. Vorrichtung nach einem der Ansprüche 13 bis 15, dadurch gekennzeichnet, dab die Waben serumdurchlässig sind.

17. Vorrichtung nach Anspruch 15, dadurch gekennzeichnet, dab die Verteilerrinne (3) ein Ausgangsende aufweist, dessen Breite etwa der Länge einer Seite des besagten Rechtecks entspricht, lotrecht zur gegenseitigen Verschiebungsrichtung (F) des Trichters (5) und der Wabenreihe (11).

18. Vorrichtung nach einem der Ansprüche 13 bis 17, dadurch gekennzeichnet, dab sie weiters ein Serumentzugsmittel (6) umfabt, bestehend aus einer geneigten, serumdurchlässigen, vor dem Trichter (5) angeordneten Ebene (6).

19. Vorrichtung nach einem der Ansprüche 13 bis 18, dadurch gekennzeichnet, dab der Trichter (5) an seinen Öffnungen (16) Profilzähne (15) aufweist, die sich parallel zur gegenseitigen Verschiebungsrichtung (F) des Trichters (5) und der Wabenreihe (11) und in den Trichter (5) hinein erstrecken.

20. Vorrichtung nach Anspruch 19, dadurch gekennzeichnet, dab die besagten Profilzähne (15) etwa in Richtung der Räumen (17) angeordnet sind, die zwei angrenzende Waben (11) voneinander trennen.

21. Vorrichtung nach einem der Ansprüche 13 bis 20, dadurch gekennzeichnet, dab die Öffnungen (16) des Trichters (5) von Verschlubzähnen (9) getrennt sind, die sich in Richtung von Räumen (18) ohne Formwaben (11) befinden.

22. Vorrichtung nach einem der Ansprüche 13 bis 21, dadurch gekennzeichnet, dab die Waben (11) Zylinder von einstellbarer Höhe sind.

23. Vorrichtung nach einem der Ansprüche 13 bis 22, dadurch gekennzeichnet, dab die Waben einen abnehmbaren Boden (12) aufweisen, so dab die Quark- und Serummischung aus den Waben (11) in die unter den Waben (11) angeordneten Formen (13) flieben kann.
